# EUROPÄISCHE PATENTSCHRIFT

(11) **EP 1 611 383 B1**
(45) Veröffentlichungstag und Bekanntmachung des Hinweises auf die Patenterteilung: **28.02.2007**
(21) Anmeldenummer: 04719350.3
(22) Anmeldetag: 11.03.2004
(51) Int. Cl.: F16K 31/06

(54) **ELEKTROPNEUMATISCHER DRUCKWANDLER MIT TEMPERATURKOMPENSIERTEM MAGNETKREIS**
ELECTROPNEUMATIC PRESSURE TRANSDUCER COMPRISING A TEMPERATURE COMPENSATED MAGNETIC CIRCUIT
CONVERTISSEUR DE PRESSION ELECTROPNEUMATIQUE POURVU D'UN CIRCUIT MAGNETIQUE A COMPENSATION THERMIQUE

(30) Priorität: 27.03.2003 DE 10313854
(43) Veröffentlichungstag der Anmeldung: 04.01.2006
(73) Patentinhaber: ROBERT BOSCH GMBH, 70442 Stuttgart (DE)
(72) Erfinder: KRIMMER, Erwin, 73655 Pluederhausen (DE)
(74) Vertreter: Hörschler, Wolfram Johannes
(86) Internationale Anmeldenummer: PCT/DE2004/000476
(87) Internationale Veröffentlichungsnummer: WO 2004/085895

(56) Entgegenhaltungen:
- DE-A- 3 126 246
- DE-A- 19 500 567
- DE-A- 19 623 960
- GB-A- 1 337 133
- US-A- 2 283 903
- US-A- 4 705 219

## Beschreibung

### Technisches Gebiet

Elektropneumatische Druckwandler können in Fahrzeugen eingesetzt werden und erlauben die Bereitstellung eines zwischen einem Umgebungsdruck und einem vorgebbaren Unterdruck liegenden Verbraucherdruckes (Verbraucherunterdruck). Die Höhe des Verbraucherdruckes wird über einen Steuerstrom eingestellt, mit dem ein Spulenkörper eines Magnetventiles beaufschlagt wird.

### Stand der Technik

DE 195 00 567.8 offenbart einen elektropneumatischen Druckwandler. Eine dem Steuerstrom, mit welchem ein Spulenkörper eines Magnetventils beaufschlagt wird, proportionale Magnetkraft, hält einen Anker gegen ein Dichtsitz, der einen mit dem Umgebungsdruck verbundenen Anschluss von einem Anschluss abdichtet, an dem der Verbraucherdruck anliegt. Bei stromlosem Zustand des Magnetventils ist dieser Dichtsitz geschlossen. Dabei ist von Nachteil, dass systemimmanente Undichtigkeiten zwischen einem mit dem Unterdruck beaufschlagbaren Anschluss und dem den Verbraucherdruck aufweisenden Anschluss auftreten. An diesem liegt im stromlosen Zustand des Magnetventiles ein relativ großer Verbraucherunterdruck an.

DE 196 23 960 A1 bezieht sich ebenfalls auf einen elektropneumatischen Druckwandler. Der offenbarte elektropneumatische Druckwandler umfasst ein Magnetventil, das eine Magnetspule sowie einen, gegen einen einen Dichtsitz bildenden Anschlag verschiebbar geführten Anker aufweist. Der Anker ist mittels eines biegeelastischen Halteelementes gehalten. Im stromlosen Zustand der Magnetspule ist der Anker in einem Abstand zu dem Anschlag gehalten, derart, dass sich ein Ringspalt zwischen einem mit Umgebungsdruck beaufschlagbaren Bereich und einem mit Unterdruck beaufschlagbaren Bereich des elektropneumatischen Druckwandlers ergibt. Der Ringspalt kann mittels des biegeelastisch ausgebildeten Halteelementes eingestellt werden. Eine den Anker in der Horizontalen haltende Federkraft des Halteelementes ist größer bemessen als eine senkrecht auf den Anker wirkende Federkraft eines den Anker in Richtung des Anschlages drückenden Federelementes.

US 2,283,903 bezieht sich auf ein elektromagnetischen Betätiger mit einer Spule. In der Spule des elektromagnetischen Betätigers ist ein Kern beweglich angeordnet sowie ein Anschlag vorgesehen, um die Bewegung des Kerns zu begrenzen. Der Anschlag weist eine im wesentlichen konisch verlaufende Vertiefung auf sowie ein längliches thermostatisches Element, dass an seinem einen Ende an dem Kern befestigt ist und mit seinem anderen Ende mit der konischen Vertiefung zusammenwirkt. Das thermostatische Element dehnt sich bei einer Temperaturerhöhung aus und drückt gegen die konische Vertiefung in dem Anschlag. Dadurch wird der Kern auf Abstand zu dem Anschlag gehalten, wobei es zwischen Anschlag und Kern zu einer Vergrößerung des Spaltes kommen kann. Mittels des thermostatischen Elementes soll ein Zusammenkleben von Kern und Anschlag nach der Bestromung des Magneten aufgrund von Ablagerungen verhindert und damit das Schließen des Ventils ermöglicht werden.

US 4,705,219 bezieht sich auf ein elektromagnetisch betätigbaren Kraftstoffinjektor. Bei diesem Kraftstoffinjektor sind Einrichtungen vorgesehen, die auf Temperaturänderung durch Änderung einer physikalischen Eigenschaft reagieren und dadurch eine Temperatur abhängigen der Flüssigkeitsdurchflusscharakteristika des Injektors entgegenwirken.

Um die Funktion eines elektropneumatischen Wandlers über der Temperatur stabil zu halten, ist es erforderlich, dass die auf den Anker des Magnetventils wirkende Magnetkraft konstant bleibt. Dies kann beispielsweise dadurch erreicht werden, dass zusätzliche Bauelemente wie Heißleiter und parallel geschaltete Wicklungen aus Konstantan-Draht eingesetzt werden, über welche der Spulenwiderstand und damit über die Beeinflussung des Stromes auch die Magnetkraft konstant gehalten werden können. Eine derartige Temperaturkompensation erfordert jedoch zusätzliche Bauelemente, die zum Erzielen einer Temperaturkompensation zwar hilfreich sind, jedoch einen zusätzlich zu betreibenden Aufwand darstellen.

### Darstellung der Erfindung

Mit der erfindungsgemäß vorgeschlagenen Lösung kann ein elektropneumatischer Wandler mit einer Temperaturkompensationseinrichtung versehen werden, die einfach aufgebaute Bauteile aufweist. Der erfindungsgemäß vorgeschlagenen Lösung zufolge wird ein einfaches Dehnelement aus einem geeigneten Kunststoffmaterial verwendet. Bevorzugt werden hochtemperaturfeste Kunststoffe mit einem geeigneten Wärmedehnungsverhalten verwendet, wie zum Beispiel PA 6.6 unverstärkt.

Das eingesetzte Dehnelement aus einem Kunststoffmaterial verändert über die temperaturabhängige Wärmedehnung einen Arbeitsluftspalt zwischen dem Anker und dem Magnetkern des Magnetventiles derart, dass durch die damit verbundene magnetische Widerstandsänderung des Magnetkreises die Widerstandsänderung der Magnetspule kompensiert wird. Zusätzlich vorzusehende Bauelemente wie Heißleiter oder parallel geschaltete Wicklungen aus Konstantan-Draht können entfallen. Deren Funktion wird gemäß der erfindungsgemäß vorgeschlagenen Lösung durch ein einfaches in das Magnetventil integrierbares Dehnelement aus einem Kunststoffmaterial übernommen.

Der Magnetkreis des elektropneumatische Wandlers umfasst eine Magnetspule, ein Joch, einen Bügel, den Magnetkern sowie den Magnetanker. In bevorzugter Ausgestaltung des Magnetankers ist dessen Stirnseite als Dichtung ausgebildet, so dass je nach Bestromung über die sich einstellende Magnetkraft eine genau dosierte Zuströmung des Umgebungsdruckes p_{ATM} erfolgt und sich aufgrund dessen ein gewünschter vorgebbarer Regeldruck einstellt. Die Magnetkraft ist temperaturabhängig. Da mit steigender Temperatur der Spulenwiderstand in der Magnetspule steigt und dadurch der Strom und somit auch die Magnetkraft abnimmt, kann diesem Effekt durch eine Verkleinerung des Arbeitsluftspaltes entgegengewirkt werden. Dies wird dadurch erreicht, dass das Magnetventil ein einseitig eingespanntes Dehnelement aus einem geeigneten Kunststoffmaterial umfasst, welches über einen integrierten Pol den Arbeitsluftspalt in Abhängigkeit von der Temperatur verkleinert oder vergrößert.

### Zeichnung

Anhand der Zeichnung wird die Erfindung nachstehend eingehender beschrieben.

Die einzige Figur zeigt einen temperaturkompensierten Magnetkreis eines erfindungsgemäß ausgestalteten elektropneumatischen Wandlers.

### Ausführungsvarianten

Der Zeichnung ist ein elektropneumatischer Druckwandler 10 zu entnehmen, in welchem ein Magnetventil 11 aufgenommen ist. Das Magnetventil 11 ist in einem Gehäuse 12 des elektropneumatischen Druckwandlers 10 aufgenommen, welches seinerseits durch einen Gehäusedeckel 30 verschließbar ist. Zwischen dem Gehäusedeckel 30 und dem Gehäuse 12 ist eine Deckelmembran 29 eingelassen, deren Außenring beim Fixieren des Gehäusedeckels 30 auf dem Gehäuse 12 in Ausnehmungen eingespannt wird.

Das Magnetventil 11 umfasst eine Magnetspule 13, welche im Gehäuse 12 von einem topfförmig konfigurierten Joch 17 umschlossen ist. Die Magnetspule 13 stellt ein Element eines Magnetkreises 31 dar, und ist auf einer Ankerführung 42 aufgenommen, welche sich in axialer Richtung durch das Gehäuse 12 des elektropneumatischen Druckwandlers 10 erstreckt. Die Ankerführung 42 kann beispielsweise an ihrer Umfangsfläche als Nuten ausgebildete Kanäle umfassen. Darüber hinaus umfasst der Magnetkreis 31 neben der Magnetspule 13 einen Bügel 15, einen Magnetanker 16, das bereits erwähnte Joch 17 sowie einen Magnetkern, der durch Bezugszeichen 19 identifiziert ist. Der Magnetanker 16 weist eine Stirnseite auf, die als Dichtung 18 ausgebildet ist. Die Stirnseite des Magnetankers 16 umschließt einen in den Magnetanker 16 integrierten Pol 21, der aus einem metallischen Material gefertigt ist. Der in das Dehnelement 22 eingelassene Pol 21 umfasst einen Steckzapfen 26, über welchem der Pol 21 mit einem ebenfalls vom Magnetanker 16 umschlossenen Dehnelement 22 aus Kunststoffmaterial verbunden ist. Der Steckzapfen 26 des Poles 21 ist mit einem Tannenbaumprofil versehen, über welchem der Pol 21 mit dem Dehnelement 22 fest verbunden ist. Das Dehnelement 22 aus Kunststoffmaterial ist an einer Einspannstelle 23 einseitig im Magnetkern 16 eingespannt. Der Pol 21 weist eine Stirnseite 28 auf, die in etwa mit der ringförmig, als Dichtung 18 ausgebildeten Stirnseite des das Dehnelement 22 sowie den Pol 21 umschließenden Magnetkerns 16 fluchtet.

Die als Dichtung 18 konfigurierte Stirnseite des Magnetkernes 16 sowie die Stirnseite 28 des Poles 21 begrenzen einen Arbeitsluftspalt 20. Die gegenüberliegende Begrenzung des Arbeitsluftspaltes 20 wird durch die Stirnseite eines Magnetkernes 19 gebildet, welcher ebenfalls ein Element des Magnetkreises 31 des Magnetventiles 11 darstellt.

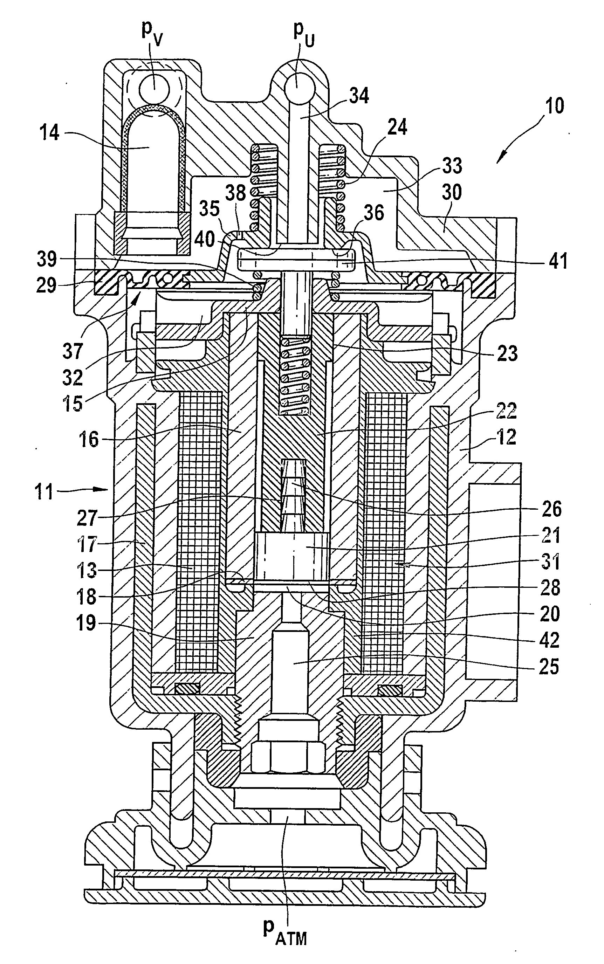

Ein das Gehäuse 12 verschließender Deckel 30 umfasst einen Stutzen 14, über welchen ein in Figur 1 nicht dargestellter Verbraucher mit einem Verbraucherunterdruck p_{V} versorgbar ist. Darüber hinaus umfasst der Gehäusedeckel 30, in welchem ein den Bügel 15 mittelbar beaufschlagendes Federelement 24 aufgenommen ist, eine Öffnung, an welcher ein Unterdruckniveau p_{U} ansteht. An der Unterseite des Gehäuses 12 ist eine Öffnung ausgebildet, an der Atmosphärendruck p_{ATM} anliegt. Durch Kanäle, die als Nuten in der Ankerführung 42 ausgebildet sein können, wird ein erster Ringraum 32 über die als Dichtsitz wirkende Dichtung 18, das heißt, wenn diese offen steht, mit Atmosphärendruck p_{ATM} verbunden.

Der Magnetkreis 31 des Magnetventiles 11, welches im elektropneumatischen Druckwandler 10 aufgenommen ist, umfasst im wesentlichen die Elemente Magnetspule 13, das Joch 17, den Bügel 15, den Magnetanker 16 sowie den Magnetkern 19. Über die im Boden des Gehäuses 12 ausgebildete Öffnung und die Durchgangsbohrung 25 im Magnetkern 19 steht Umgebungsdruck p_{ATM} am Arbeitsluftspalt 20 an. Durch die Ausbildung der Stirnseite des Magnetankers 16 als Dichtung 18 stellt sich je nach Bestromung der Magnetspule 13 über die sich einstellende Magnetkraft eine genau dosierte Zuströmung des Umgebungsdruckes PATM ein, und der gewünschte Regeldruck baut sich auf. Diese Kraft muss temperaturunabhängig sein. Die Temperaturunabhängigkeit der sich einstellenden Magnetkraft wird dadurch erreicht, dass bei steigender Temperatur eine Verkleinerung des Arbeitsluftspaltes 20 erfolgt. Mit steigender Temperatur steigt der elektrische Widerstand der Magnetspule 13 an. Aufgrund dessen nimmt der Strom und somit auch die erzeugte Magnetkraft ab. Aufgrund der mit steigender Temperatur ebenfalls einsetzenden Wärmedehnung des einseitig an der Einspannstelle 23 eingespannten Dehnelementes 22 aus einem geeigneten Kunststoffmaterial wird über dessen Wärmedehnung der Arbeitsluftspalt 20 verkleinert. Die Wärmedehnung des einseitig eingespannten Dehnelementes 22 aus Kunststoffmaterial bewirkt, dass sich der Pol 21 in Richtung auf die Stirnfläche des dem Magnetanker 16 gegenüberliegenden Magnetkerns 19 ausdehnt und somit die lichte Weite des Arbeitsluftspaltes 20 verändert. Da das einseitig an der Einspannstelle 23 eingespannte Dehnelement 22 aus einem geeigneten Kunststoffmaterial von dem hülsenförmig ausgebildeten Magnetanker 16 vollständig umschlossen ist, kann eine Wärmedehnung des Dehnelementes 22 nur in axiale Richtung erfolgen. Aufgrund einer derart vorgegebenen Verformungsmöglichkeit des Dehnelementes 22 fährt die Stirnfläche 28 des am Dehnelement 22 befestigten Pols 21 in Richtung auf dem Arbeitsluftspalt 20 zu und verkleinert diesen.

Dadurch wird erreicht, dass sich bei steigender Temperatur aufgrund der Wärmedehnung des Dehnelementes 22 der Arbeitsluftspalt 20 so verändert, das heißt verkleinert wird, dass durch die damit verbundene magnetische Widerstandsänderung des Magnetkreises 31 die Widerstandsänderung in der Magnetspule 13, aufgrund des mit steigender Temperatur ansteigenden Spulenwiderstandes, kompensiert wird. Die abnehmende Magnetkraft aufgrund der Temperaturänderung der Magnetspule 13 und des damit einhergehenden Anstieges des Spulenwiderstandes wird durch eine gleichzeitig erfolgende Verkleinerung des Arbeitsluftspaltes 20 kompensiert, so dass die Funktion des Magnetventiles 11 des elektropneumatischen Druckwandlers 10 nunmehr temperaturunabhängig ist, das heißt die Magnetkraft des Magnetventiles 11 wird durch eine temperaturabhängige Vergrößerung beziehungsweise Verkleinerung des Arbeitsluftspaltes 20 konstant gehalten. Bisher erforderliche zusätzliche Bauelemente wie Heißleiter und parallel geschaltete Wicklungen aus Konstantan-Draht können mit der erfindungsgemäß vorgeschlagenen Lösung vermieden werden.

Die Wirkungsweise des pneumatischen Regelteiles des elektropneumatischen Druckwandlers stellt sich wie folgt dar:

Die Deckelmembran 29 und der Topf 35 bilden eine Baueinheit, welche beispielsweise als ein mit Gummi umspritztes Kunststoffteil ausgebildet werden kann. Im Topf 35 befindet sich ein äußerer Dichtsitz 36, auf welchen im Ruhezustand ein mit einer Gummierung versehenes Druckstück 41 über ein Federelement 39 drückt. Die den Topf 35 und die Deckelmembran 29 umfassende Baueinheit wird über das Federelement 24 auf Anschlagrippen 37 gedrückt. Ein innerer Dichtsitz 40 an dem Anschlussstutzen 14 für Versorgungsunterdruck steht offen. Die beiden mit Bezugszeichen 32 und 33 gekennzeichneten Ringräume sind druckausgeglichen, da sich zur Verbesserung des Regelverhaltens und zur Reduzierung des Luftverbrauches im Topf 35 eine Ausgleichsbohrung 38 befindet.

Beim Einschalten von Unterdruck und Regelstrom wird durch den Unterdruck die Baueinheit aus Topf 35 und Deckelmembran 29 angehoben. Beim Hochfahren verschließt ein Druckstück 41 den erwähnten, inneren Dichtsitz 40, während ein äußerer Dichtsitz 36 öffnet, so dass der Zustrom zum ersten Ringraum 32 freigegeben wird. Der am Magnetanker 16 ausgebildete Dichtsitz 18 wird durch den angelegten Regelstrom geschlossen.

Erreicht die Kraft des auch am Magnetanker 16 anliegenden Unterdruckes aus dem ersten Ringraum 32 die Größe der Magnetkraft und übersteigt diese, kann Umgebungsluft zuströmen, so dass sich in den Ringräumen 32 und 33 der gewünschte Regeldruck einstellt.

An dem Stutzen 14, an welchem der Verbraucherunterdruck p_{V} anliegt, kann ein über den Verbraucherunterdruck p_{V} angesteuertes Stellglied in Gestalt eines Abgasrückführungsventiles eines Kraftfahrzeuges angeschlossen sein, wobei durch Einsatz des erfindungsgemäß vorgeschlagenen elektropneumatischen Druckwandlers 10 eine Temperaturkompensation durch Einsatz einfacher Bauteile wie des Dehnelementes 22 ein Verzicht auf zusätzliche Bauelemente wie Heißleiter und einer aufwendig, parallel geschaltete Wicklung aus Konstantan-Draht erreicht werden können. Dank der Wärmedehnungseigenschaften des an der Einspannstelle 23 einseitig eingespannten Dehnelementes 22 kann der Arbeitsluftspalt 20 im Magnetkreis 31 so verändert werden, dass, durch eine daraus folgende magnetische Widerstandsänderung im Magnetkreis 31, die Änderung des Spulenwiderstandes der Magnetspule 13 kompensiert werden kann. Damit ist die durch das Magnetventil 11 des elektropneumatischen Druckwandlers 10 erzeugbare Magnetkraft temperaturunabhängig.

### Bezugszeichenliste

- 10: elektropneumatischer Druckwandler
- 11: Magnetventil
- 12: Gehäuse
- 13: Magnetspule

- P_{V}: Verbraucherunterdruck
- P_{U}: Unterdruck
- P_{ATM}: Umgebungsdruck

- 14: Stutzen
- 15: Bügel
- 16: Magnetanker
- 17: Joch
- 18: Dichtung
- 19: Magnetkern
- 20: Arbeitsluftspalt
- 21: Pol mit Steckzapfen (Tannenbaumprofil)
- 22: Dehnelement
- 23: Einspannstelle Dehnelement
- 24: Federelement
- 25: Durchgangsbohrung Magnetkern
- 26: Steckzapfen (Tannenbaumprofil)
- 27: Aufnahmebohrung
- 28: Stirnseite Pol
- 29: Deckelmembran
- 30: Gehäusedeckel
- 31: Magnetkreis
- 32: erster Ringraum
- 33: zweiter Ringraum
- 34: Anschlussstutzen Unterdruckquelle
- 35: Topf
- 36: äußerer Dichtsitz
- 37: Anschlagrippen
- 38: Ausgleichsbohrung
- 39: Topffeder
- 40: innerer Dichtsitz
- 41: genutete Ankerführung

## Patentansprüche

1. Elektropneumatischer Druckwandler (10) mit einem Magnetventil (11), welches eine Magnetspule (13) umfasst, die in ein Gehäuse (12) eingelassen ist sowie einen im Gehäuse (12) verschiebbar geführten Magnetanker (16) aufweist, dem gegenüberliegend unter Bildung eines Arbeitsluftspaltes (20) ein Magnetkern (19) angeordnet ist, der eine Durchgangsbohrung (25) aufweist, an der Umgebungsdruck (p_{ATM}) anliegt, **dadurch gekennzeichnet, dass** das Magnetventil (11) ein Dehnelement (22) aufweist, welches aus einem bei Temperaturänderung sich dehnenden Material gefertigt ist und welches den Arbeitsluftspalt (20) zwischen dem Magnetanker (16) und dem Magnetkern (19) bei steigender Temperatur durch Wärmedehnung verkleinert, so dass die auf den Magnetanker (16) wirkende, sich durch die Bestromung der Magnetspule (13) einstellende Magnetkraft temperaturunabhängig ist.

2. Elektropneumatischer Druckwandler gemäß Anspruch 1, **dadurch gekennzeichnet, dass** das Dehnelement (22) an einer Einspannstelle (23) einseitig im Magnetanker (16) eingespannt ist.

3. Elektropneumatischer Druckwandler gemäß Anspruch 1, **dadurch gekennzeichnet, dass** das Dehnelement (22) vom Magnetanker (16) umschlossen ist.

4. Elektropneumatischer Druckwandler gemäß Anspruch 1, **dadurch gekennzeichnet, dass** in das Dehnelement (22) ein Pol (21) eingelassen ist, der in dem Dehnelement (22) über eine Einsteckverbindung (26,27) aufgenommen ist.

5. Elektropneumatischer Druckwandler gemäß Anspruch 1, **dadurch gekennzeichnet, dass** eine dem Arbeitsluftspalt (20) zuweisende Stirnseite des Magnetankers (16) als Dichtung (18) ausgebildet ist und mit einem im Gehäuse (12) ausgebildeten Dichtsitz zusammenwirkt.

6. Elektropneumatischer Druckwandler gemäß Anspruch 4, **dadurch gekennzeichnet, dass** die als Dichtung (18) ausgebildete, den Arbeitsluftspalt (20) abdichtende Stirnseite des Magnetankers (16) und eine Stirnseite (28) des Pols (21) in einer Ebene liegend ausgebildet sind.

7. Elektropneumatischer Druckwandler gemäß Anspruch 1, **dadurch gekennzeichnet, dass** das Dehnelement (22) relativ zum Magnetanker (16) in axialer Richtung verformbar ist und den Arbeitsluftspalt (20) bei steigendem Spulenstrom in der Magnetspule (13) vergrößert oder bei fallendem Spulenstrom in der Magnetspule (13) den Arbeitsluftspalt (20) verkleinert.

8. Elektropneumatischer Druckwandler gemäß Anspruch 1, **dadurch gekennzeichnet, dass** das Dehnelement (22) aus Kunststoffmaterial gefertigt ist.

9. Elektropneumatischer Druckwandler gemäß Anspruch 1, **dadurch gekennzeichnet, dass** das Magnetventil (11) einen Magnetkreis (31) aufweist, der die Komponenten Magnetspule (13), ein Joch (17), einen Bügel (15), den Magnetkern (19) und den Magnetanker (16) mit integriertem Dehnelement (22) enthält.

## Claims

1. Electropneumatic pressure transducer (10) having a solenoid valve (11) which comprises a solenoid (13) which is incorporated in a housing (12) and has a magnet armature (16) which is movably guided in the housing (12), with a magnet core (19), which has a through-hole (25) to which the ambient pressure (p_{ATM}) is applied, being arranged opposite the said magnet armature (16) so as to form a working air gap (20), **characterized in that** the solenoid valve (11) has an expansion element (22) which is produced from a material that expands when the temperature changes and which reduces the working air gap (20) between the magnet armature (16) and the magnet core (19) as the temperature increases on account of thermal expansion, so that the magnetic force which acts on the magnet armature (16) and is produced by the solenoid (13) being energized is independent of the temperature.

2. Electropneumatic pressure transducer according to Claim 1, **characterized in that** the expansion element (22) is clamped in at one end of the magnet armature (16) at a clamping position (23).

3. Electropneumatic pressure transducer according to Claim 1, **characterized in that** the expansion element (22) is surrounded by the magnet armature (16).

4. Electropneumatic pressure transducer according to Claim 1, **characterized in that** a pole (21) is incorporated in the expansion element (22) and is held in the expansion element (22) by means of a plug-in connection (26, 27).

5. Electropneumatic pressure transducer according to Claim 1, **characterized in that** an end face of the magnet armature (16) which faces the working air gap (20) is in the form of a seal (18) and interacts with a sealing seat which is formed in the housing (12).

6. Electropneumatic pressure transducer according to Claim 4, **characterized in that that** end face of the magnet armature (16) which is in the form of a seal (18) and seals off the working air gap (20) and an end face (28) of the pole (21) are formed such that they lie in one plane.

7. Electropneumatic pressure transducer according to Claim 1, **characterized in that** the expansion element (22) can be deformed relative to the magnet armature (16) in the axial direction and increases the size of the working air gap (20) as the coil current in the solenoid (13) increases or reduces the size of the working air gap (20) as the coil current in the solenoid (13) falls.

8. Electropneumatic pressure transducer according to Claim 1, **characterized in that** the expansion element (22) is produced from plastic material.

9. Electropneumatic pressure transducer according to Claim 1, **characterized in that** the solenoid valve (11) has a magnetic circuit (31) which contains the components solenoid (13), a yoke (17), a clip (15), the magnet core (19) and the magnet armature (16) with the integrated expansion element (22).

## Revendications

1. Convertisseur de pression électropneumatique (10) comportant une électrovanne (11), ayant une bobine magnétique (13) introduite dans un boîtier (12) et un induit (16) mobile dans le boîtier (12), avec en face de l'induit en formant un entrefer (20), un noyau magnétique (19) pourvu d'un trou traversant (25) subissant l'effet de la pression atmosphérique (p_{ATM}),
**caractérisé en ce que**
l'électrovanne (11) présente un élément dilatable (22) en un matériau extensible en fonction des changements thermiques et réduisant par dilatation l'entrefer (20) entre l'induit (16) et le noyau magnétique (19) en cas d'augmentation de température, de telle sorte que la force magnétique agissant sur l'induit (16) et s'établissant par excitation de la bobine magnétique (13) est fonction de la température.

2. Convertisseur de pression électropneumatique selon la revendication 1,
**caractérisé en ce que**
l'élément dilatable (22) est enserré d'un côté de l'induit (16) au niveau d'un point de serrage (23).

3. Convertisseur de pression électropneumatique selon la revendication 1,
**caractérisé en ce que**
l'élément dilatable (22) est entouré par l'induit (16).

4. Convertisseur de pression électropneumatique selon la revendication 1,
**caractérisé en ce qu'**
un pôle (21) est introduit dans l'élément dilatable (22) en y étant reçu par un assemblage à emboîtement (26, 27).

5. Convertisseur de pression électropneumatique selon la revendication 1,
**caractérisé en ce qu'**
une face frontale de l'induit (16) tournée vers l'entrefer (20) représente un joint (18) et coopère avec un siège d'étanchéité formé dans le boîtier (12).

6. Convertisseur de pression électropneumatique selon la revendication 4,
**caractérisé en ce que**
la face frontale de l'induit (16) représentant un joint (18) et assurant l'étanchéité de l'entrefer (20) et une face frontale (28) du pôle (21) reposent dans un plan horizontal.

7. Convertisseur de pression électropneumatique selon la revendication 1,
**caractérisé en ce que**
l'élément dilatable (22) est déformable dans la direction axiale par rapport à l'induit (16) et augmente la taille de l'entrefer (20) en cas d'augmentation du courant dans la bobine magnétique (13) ou bien diminue la taille de l'entrefer (20) en cas de chute du courant dans la bobine magnétique (13).

8. Convertisseur de pression électropneumatique selon la revendication 1,
**caractérisé en ce que**
l'élément dilatable (22) est fabriqué en matière plastique.

9. Convertisseur de pression électropneumatique selon la revendication 1,
**caractérisé en ce que**
l'électrovanne (11) présente un circuit magnétique (31) comprenant la bobine magnétique (13), une culasse (17), un étrier (15), le noyau magnétique (19) et l'induit (16) à élément dilatable (22) intégré.
